# EUROPÄISCHE PATENTSCHRIFT

(11) **EP 0 710 613 B1**
(45) Veröffentlichungstag und Bekanntmachung des Hinweises auf die Patenterteilung: **18.03.1998**
(21) Anmeldenummer: 95250266.4
(22) Anmeldetag: 31.10.1995
(51) Int. Cl.: B65G 29/00

(54) **Vorrichtung zum Überführen von Fördergut, insbesondere von Werkstückträgern**
Device for transferring articles, especially workpiece-carriers
Dispositif pour le transfert d'objets, notamment des porte-pièces

(30) Priorität: 03.11.1994 DE 4440447
(43) Veröffentlichungstag der Anmeldung: 08.05.1996
(73) Patentinhaber: MANNESMANN Aktiengesellschaft, 40213 Düsseldorf (DE)
(72) Erfinder: Nüssle, Gerhard, D-71263 Weil der Stadt (DE)
(74) Vertreter: Presting, Hans-Joachim, Dipl.-Ing.

(56) Entgegenhaltungen:
- EP-A- 0 113 305
- DE-U- 9 012 413
- FR-A- 2 510 525

## Beschreibung

Die Erfindung betrifft eine Vorrichtung zum Überführen von Fördergut, insbesondere von Werkstückträgern von mindestens einer zuführenden Förderbahn auf mindestens eine weiterführende Förderbahn mit einem um eine Drehachse angetriebenen und die Förderbahnen verbindenden Schleppteller, der eine ringförmige Transportfläche für das Fördergut aufweist, und mit einem Ablenkelement zur Führung des Fördergutes von dem Schleppteller auf die weiterführende Förderbahn.

Aus Fördern und Heben 42 (1992), Nr. 10, Seite 749 sind sogenannte Drehtischförderer zum Ein- und Ausschleusen bzw. Umlenken von Fördergut von einer zuführenden auf mindestens eine weiterführende Förderbahn bekannt. Die Fördenbahnen sind hier als Gurtförderer und unmittelbar vor dem Drehtischförderer als Rollenbahnen ausgebildet. Erfahrungsgemäß kommen aber auch Doppelgurtförderer oder Staurollenkettenförderer hier zum Einsatz. Das Ein- und Ausschleusen bzw. Umlenken des Förderguts erfolgt über einen zwischen den Förderbahnen angeordneten drehbaren und kreisrunden Drehtisch, der mit Ablenkelementen zusammenwirkt. Im Anwendungsfall mit einer weiterführenden Förderbahn mit von der zuführenden Förderbahn abweichender Förderrichtung dient die Vorrichtung nur zum Umlenken des Förderguts und das Ablenkelement ist hierbei ortsfest angeordnet. Im Falle von mehreren weiterführenden Förderbahnen sind schwenkbare und bei Bedarf auch mit ortfesten Ablenkelementen kombiniert vorgesehen. Das Ablenkelement hat in beiden Fällen die Aufgabe, ein von einer zuführenden Förderbahn auf den Teller übergebenen Werkstückträger von dem Drehtisch herunter in Richtung einer weiterführenden Förderbahn zu leiten. Die Förderebenen des Drehtisches und der Förderbahnen sind in etwa auf gleichem Höhenniveau angeordnet. Der Drehtisch ragt seitlich soweit in die zu- und weiterführenden Förderbahnen hinein, so daß die Rollen der an dem Rand des Drehtisches angrenzenden Förderbahn in Förderrichtung gesehen schmaler und mit geringer Breite an dem Drehtisch vorbeigeführt werden kann. Aus Kombinationen dieser Drehtischförderer und Förderbahnen werden Umlaufsysteme für die Montagetechnik, Behälterfördertechnik und Werkstückträger-Transporttechnik gebildet. Hierbei sind die Drehtische aus den in der Fördertechnik bewährten Werkstoffen Stahl oder Aluminium hergestellt

Ausgehend von diesem Stand der Technik liegt der Erfindung die Aufgabe zugrunde, eine zuverlässig arbeitende Vorrichtung zum Überführen von Fördergut, insbesondere von Werkstückträgern zu schaffen, die gleichzeitig eine Minimierung der Antriebsenergie ermöglicht.

Diese Aufgabe wird bei einer Vorrichtung zum Überführen von Fördergut durch die im Anspruch 1 aufgeführten Merkmale gelöst. Vorteilhafte Ausgestaltungen der Vorrichtung sind in den Unteransprüchen 2 bis 6 angegeben.

Erfindungsgemäß wird durch die Ausbildung des Schlepptellers aus natürlichem Hartgestein oder hartem Kunststein gegenüber dem sonst verwendeten Stahl oder Aluminium die träge Masse des Schlepptellers verringert, so daß eine Reduzierung der Antriebsleistung mit entsprechenden Kostenvorteilen möglich wird. Darüber hinaus können derartige erfindungsgemäße Schleppteller mit einer äußerst planen Transportfläche für das Fördergut versehen werden, deren Planheit den Reibschluß zwischen dem Fördergut und dem Schleppteller verbessert. Hierdurch wird ein zuverlässiges Ein- und Ausschleusen sowie Umlenken des Förderguts begünstigt. Außerdem weist die plane Oberfläche des Schlepptellers zugleich gute ästhetische Eigenschatten auf.

Die zuvor beschriebenen Vorteile werden optimiert, wenn der Schleppteller aus Granit ist und als flache zylinderförmige Scheibe ausgebildet ist. Der Werkstoff Granit verfügt über eine hohe Abriebfestigkeit, die einen Antrieb der Schleppteller über ein Reibrad und dessen Verwendung als Umlenkscheibe oder Antriebsscheibe für einen Antriebsriemen mit einfachen Mitteln ermöglicht. Die herkömmlichen Tellerwerkstoffe wie Stahl oder Aluminium müssen demgegenüber mit zusätzlichen Arbeitsgängen veredelt werden. Eine günstige Lagerung der Schleppteller kann durch exentrische zu dessen Drehachse angeordnete Trag- und Führungsrollen erreicht werden.

Besonders geeignet ist die erfindungsgemäße Vorrichtung zum Überführen von Fördergut für eine Verwendung mit Förderbahnen, die jeweils aus zwei parallel zueinander verlaufenden und voneinander beabstandeten Förderelementen bestehen, die als Staurollenketten- oder Gurtförderer ausgebildet sind und das Fördergut an ihren seitlichen Bereichen tragen und führen.

Als besonders vorteilhaft erweist sich die Bildung eines Umlaufsystems für das Fördergut aus zwei Schlepptellern, die jeweils über zu- und weiterführe Förderstrecken, die vorzugsweise parallel zueinander verlaufen, verbunden sind und die Anbindung dieses Umlaufsystems über weitere zu- und weiterführende Förderbahnen und einen dritten Schleppteller an eine Hauptstrecke, die durch eine zu-und weiterführende Förderbahn gebildet ist. Hierdurch wird ermöglicht, daß das Fördergut aus der Hauptstrecke ausgeschleust werden und unabhängig von der Förderbewegung der Hauptstrecke innerhalb des Umlaufsystems verschiedene Stationen anfahren kann. Besonders geeignet ist ein derartiges Fördersystem für als Werkstückträger ausgebildetes Fördergut, auf dem Werkstücke angeordnet sind, die in Montagestationen des Umlaufsystems bearbeitet bzw. montiert werden. Darüber hinaus sind die drei Schleppteller, die gleichzeitig als Riemenscheiben verwendet werden können, über einen einzigen Antrieb antreibbar.

Ein Ausführungsbeispiel der Erfindung ist in einer Zeichnung dargestellt und wird im folgenden näher beschreiben. Die einzige Figur zeigt eine Draufsicht auf einen Ausschnitt einer Förderanlage mit drei Vorrichtungen zur Übergabe von Fördergut 1, das hier als palettenartiger Werkstückträger ausgebildet ist. Das Fördergut 1 wird jeweils von einer zuführenden Förderbahn 2 auf eine weiterführende Förderbahn 3 übergeben. Die Förderbahnen 2,3 sind als Gurtförderer ausgebildet, die im wesentlichen aus zwei länglichen Förderelementen 4 bestehen, die parallel zueinander und mit Abstand voneinander angeordnet sind sowie einerseits als angetriebene Gurtförderer und andererseits als nicht angetriebene Rollenbahn ausgebildet sind. Der Abstand der Förderelemente 4 zueinander ist so gewählt, daß das Fördergut 1 in Förderrichtung F gesehen jeweils an seinen Seiten von den Förderelementen 4 getragen wird und zusätzlich über parallel zu den Förderelementen 4 geführte Führungsschienen 5 seitlich geführt wird. Die Förderelemente 4 können auch als angetriebene Staurollenkettenförderer bzw. als Kombination von Gurt- und Staurollenkettenförderern, wobei zumindest ein Förderelement 4 angetrieben ist, ausgebildet werden.

Die Vorrichtungen zur Übergabe des Förderguts 1 bestehen im wesentlichen jeweils aus einem Schleppteller 6 und mindestens einem Ablenkelement 7. Der Schleppteller 6 ist um eine Drehachse 8 drehbar zentral gelagert. Die Transportflächen des Schlepptellers 6 und der Förderelemente 4 sind weitestgehend auf einem Höhenniveau und horizontal ausgerichtet.

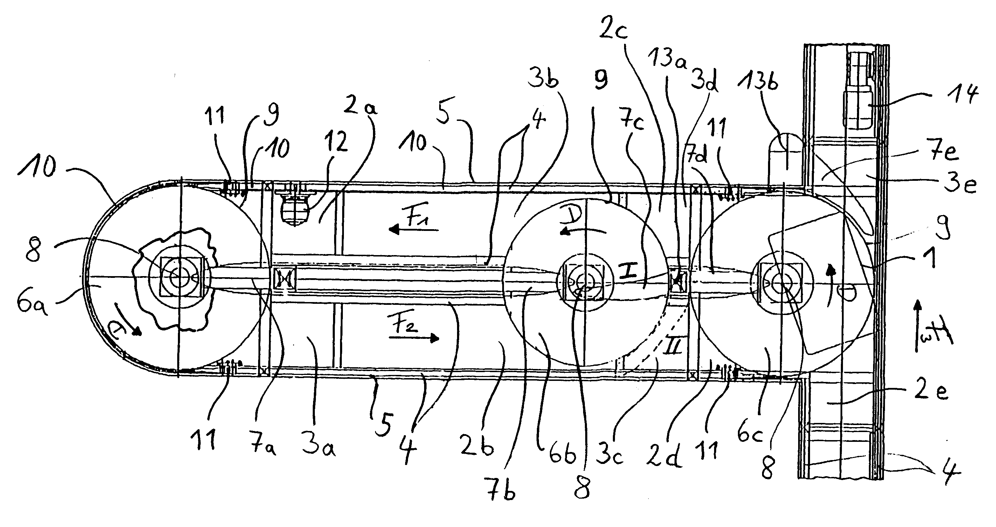

In der Figur 1 ist ein Abschnitt einer Förderanlage mit drei Schlepptellern 6a, 6b und 6c gezeigt. Der erste Schleppteller 6a hat die Funktion einer 180°-Umlenkung zwischen der zuführenden Förderbahn 2a und der weiterführenden Förderbahn 3a, die parallel mit entgegengesetzten Förderrichtung F₁, F₂ und mit Abstand zueinander angeordnet sind. Der Schleppteller 6a ist seitlich in die Förderbahnen 2a und 3a hineinragend angeordnet, so daß die Förderelemente 4, die auf der der Drehachse 8 des Schlepptellers 6a abgewandten Seite der Förderbahnen 2a und 3a liegen, tangential und mit geringem Abstand neben dem äußeren Rand 9 des Schlepptellers 6 enden bzw. beginnen. Die Führungsschienen 5 der äußeren Förderelemente 4 der Förderbahnen 2a und 3a sind um den Schleppteller 6 weitergeführt, wobei diese nahezu an den Rand 9 des Schlepptellers angrenzen. Die beiden anderen Förderelemente 4 der Förderbahnen 2a und 3a, die auf der der Drehachse 8 des Schlepptellers 6 zugewandten Seite liegen, enden bzw. beginnen jeweils unmittelbar vor bzw. nach dem Rand 9 des Schlepptellers 6a. Hierbei ist das innere Förderelement 4 mit seiner Führungsschiene 5 entsprechend der Breite b des Förderguts 1 jeweils nach innen zur Drehachse 8 des Schlepptellers 6a hin versetzt angeordnet.

Das Ablenkelement 7a ist mit geringem Abstand oberhalb des horizontal ausgerichteten Schlepptellers 6a angeordnet und ist in Draufsicht auf den Schleppteller 6a gesehen parabelförmig ausgebildet. Die Breite des Ablenkelementes 7a ist so gewählt, daß zwischen den Führungsschienen 5 der Förderbahnen 2a, 3a und der Außenkontur des Ablenkelemtes 7a ein Abstand verbleibt, der größer ist als die Breite des Förderguts 1. Hierdurch wird erreicht, daß das Fördergut 1 einerseits sich nicht zwischen den Führungsschienen 5 und dem Ablenkelement 7a verklemmen kann und andererseits ein Verdrehen des Förderguts 1 verhindert wird. Am Übergang zu den angrenzenden Förderbahnen 2a, 3a erweitert sich das Ablenkelement 7a linear bis in dessen Endbereich eine Breite erreicht wird, die so gewählt ist, daß das Ablenkelement 7a mit seinem Endbereich in Förderrichtung F der Förderbahnen 2a, 3a gesehen mit dessen innerer Führungsschiene 5 fluchtet. Der durch das Ablenkelement 7a innen begrenzte und die Führungsschienen 5 außen begrenzte Förderweg für das Fördergut 1 auf dem Schleppteller 6 ist im wesentlichen U-förmig.

Die zu- und weiterführenden Förderbahnen 2a und 3a sind jeweils an ihrem dem ersten Schleppteller 6a abgewandten Ende mit einem weiteren zweiten Schleppteller 6b verbunden und dienen dort in umgekehrter Funktion als zuführende Förderbahn 2b und weiterführende Förderbahn 3b. Dieser zweite Schleppteller 6b weist neben dem ortsfesten Alenkelement 7b ein weiteres Ablenkelement 7c auf, das um eine horizontale Schwenkachse 13a schwenkbar ist. Das schwenkbare Ablenkelement 7c hat die Aufgabe, das Fördergut aus dem durch die Schleppteller 6a und 6b sowie den Förderbahnen 2a, 2b, 3a und 3b gebildeten Umlaufsystem auf eine weiterführende Förderbahn 3c auszuschleusen. Das Ablenkelement 7c ist aus einer ersten Ablenkposition I in eine zweite Ablenkposition II schwenkbar. In der ersten Ablenkposition I ist das Ablenkelement 7c parallel und in Verlängerung des ortsfesten Ablenkelements 7b angeordnet, so daß das von der zuführenden Förderbahn 2b auf den Drehteller 6b übergebene Fördergut 1 von dem Ablenkelement 6b in Richtung der weiterführenden Förderbahn 3c geleitet wird. In dieser Position ist auch von einer in Verlägerung der Förderbahnen 2a und 3b angeordneten zuführenden Förderbahn 2a Fördergut 1 in das Umlaufsystem einschleusbar. In der zweiten Ablenkposition II wird das auf dem Schleppteller 6b ruhende Fördergut von dem Ablenkelement 6b im Halten seiner Position auf dem Schleppteller 6b unterstützt und der Förderweg in Richtung der weiterführenden Förderbahn 3c unterbrochen.

An den Schleppteller 6b schließt sich ein weiterer dritter Schleppteller 6c an, der als Vorrichtung zum Ein- und Ausschleusen von Fördergut 1 von einer aus einem zuführenden Förderbahn 2e und einer weiteren Förderbahn 3e gebildeten Hauptstrecke in Richtung des Umlaufsystems dient. Der Schleppteller 6c ist somit mit zwei zuführenden Förderbahnen 2d und 2e und zwei weiterführenden Förderbahnen 3d und 3e verbunden. Hierbei sind die die Hauptstrecke bildenden Förderbahnen 2e und 3e in einer gemeinsamen Förderrichtung F₃ und hintereinander angeordnet sowie rechtwinklig zu den Förderbahnen 2a bis d und 3a bis d ausgerichtet. Der dritte Schleppteller 6c weist ebenfalls zur Ablenkung und Führung des Förderguts 1 ein ortsfestes Alenkelement 7d und ein schwenkbar gelagertes Ablenkelement 7e auf, um weichenartig das Fördergut je nach Bedarf in die weiterführende Förderbahn 3e oder 3d umzulenken.

Die Schleppteller 6a bis 6c sind jeweils aus Granit hergestellt und weisen eine Dicke von 20 bis 40 mm auf sowie einen Durchmesser von 500 bis 1250 mm. Es ist auch möglich, harten Kunststein wie z.B. Mineralbeton zu verwenden. Der Antrieb der Schleppteller 6a und 6c erfolgt über einen Flachriemen 11, der endlos umlaufend um die Ränder 9 der Schleppteller 6a und 6c geführt ist. Diese Antriebsart wird begünstigt durch die hohe Abriebfestigkeit der Schleppteller 6a und 6c aus Granit sowie deren ausreichende Dicke, um eine ausreichende Reibschlußfläche für den Flachriemen 10 zu bieten. Der Flachriemen 10 wird ein- und ausgangsseitig vor bzw. nach den Schlepptellern 6 aus seiner senkrecht stehenden in eine horizontal liegende Lage durch Umlenkelemente 11 umgelenkt, auf dem das Fördergut 1 aufliegt. Hierdurch ist es möglich, den Flachriemen 10 auch als Antriebsmittel für die Förderelemente 4 der Förderbahnen 2a bis d und 3a bis d zu nutzen. Der Flachriemen 10 wird über einen an den Förderelementen 4 angeordneten Antrieb 12 angetrieben. Es ist auch möglich, einen der Schleppteller 6a und 6c über einen Reibradantrieb anzutreiben. Der zweite Schleppteller 6b ist über eine nicht dargestellte Antriebsverbindung mit dem dritten Schleppteller 6c verbunden. Somit ist eine Bewegung des gesamten aus den drei Schlepptellern 6a bis 6c und Abschnitten der Förderbahnen 2 und 3 gebildeten Fördersystems mit einem einzigen Antrieb 12 zu betreiben. Die aus den Förderbahnen 2e und 3e gebildete Hauptstrecke wird von einem einzigen Antrieb 14 betrieben.

## Patentansprüche

1. Vorrichtung zum Überführen von Fördergut, insbesondere von Werkstückträgern von mindestens einer zuführenden Förderbahn auf mindestens eine weiterführende Förderbahn mit einem um eine Drehachse angetriebenen und die Förderbahnen verbindenden Schleppteller, der eine ringförmige Transportfläche für das Fördergut aufweist, und mit einem Ablenkelement zur Führung des Fördergutes von dem Schleppteller auf die weiterführende Förderbahn, dadurch gekennzeichnet,
daß der Schleppteller (4) aus natürlichem Hartgestein oder harten Kunststein ist.

2. Vorrichtung nach Anspruch 1,
dadurch gekennzeichnet,
daß der Schleppteller (4) aus Granit besteht ist.

3. Vorrichtung nach einem der Ansprüche 1 oder 2,
dadurch gekennzeichnet,
daß der Schleppteller (6) als flache zylinderförmige Scheibe ausgebildet ist.

4. Vorrichtung nach einem der Ansprüche 1 bis 3,
dadurch gekennzeichnet,
daß der Schleppteller (6) auf exzentrisch zur Drehachse angeordneten Trag-und Führungsrollen gelagert ist.

5. Vorrichtung nach einem der Ansprüche 1 bis 4,
dadurch gekennzeichnet,
daß der Schleppteller (6) mittels eines Reibradantriebs antreibbar ist.

6. Vorrichtung nach einem der Ansprüche 1 bis 5,
dadurch gekennzeichnet,
daß die Förderbahnen (2, 3) jeweils aus zwei parallel zueinander verlaufenden und voneinander beabstandeten Förderelementen (4) bestehen, die als Staurollenketten- oder Gurtförderer ausgebildet sind und das Fördergut (1) an ihren seitlich Bereichen tragen und über Führungsschienen (5) führen.

7. Vorrichtung nach einem der Ansprüche 1 bis 6,
dadurch gekennzeichnet,
daß aus zwei Schlepptellern (6a und 6b) die jeweils über zu- und weiterführende Förderstrecken (2a, 2b, 3a, 3b) miteinander verbunden sind, ein Umlaufsystem für das Fördergut gebildet ist, einer der beiden Schleppteller (6a, 6b) des Umlaufsystems über weitere zu- und weiterführende Förderbahnen (2c, 2d, 3c, 3d) mit einem dritten Schleppteller (6c) verbunden ist, wobei der dritte Schleppteller (6c) zur Übergabe bzw. Aufnahme des Förderguts zwischen dem Umlaufsystem und einer Hauptstrecke, die durch eine weitere zu- und weiterführende Förderbahn (2e, 3e) gebildet ist, verbunden ist.

8. Vorrichtung nach Anspruch 7,
dadurch gekennzeichnet,
daß die drei Schleppteller (6a, 6b, 6c) über einen einzigen Antrieb (12) angetrieben sind.

## Claims

1. A device for the transferring of goods to be transported, in particular of workpiece carriers from at least one supplying conveyor belt to at least one conveyor belt conveying further, with a drag plate driven about a rotation axis and connecting the conveyor belts, which drag plate has an annular transport surface for the goods to be transported, and with a deflection element to guide the goods to be transported from the drag plate to the conveyor belt conveying further,
characterised in that
the drag plate (4) is of natural hard stone or of hard synthetic stone.

2. The device according to Claim 1,
characterised in that
the drag plate (4) consists of granite.

3. The device according to one of Claims 1 or 2,
characterised in that
the drag plate (6) is constructed as a flat cylindrical disc.

4. The device according to one of Claims 1 to 3,
characterised in that
the drag plate (6) is mounted on bearing- and guide rollers arranged eccentrically to the rotation axis.

5. The device according to one of Claims 1 to 4,
characterised in that
the drag plate (6) is drivable by means of a friction wheel drive.

6. The device according to one of Claims 1 to 5,
characterised in that
the conveyor belts (2, 3) in each case consist of two conveyor elements (4) running parallel to each other and spaced apart from each other, which are constructed as accumulation roller chain- or belt conveyors and carry the material to be conveyed (1) on their lateral regions and guide it over guide rails (5).

7. The device according to one of Claims 1 to 6,
characterised in that
a circulating system for the material to be conveyed is formed from two drag plates (6a and 6b) which are connected with each other in each case via conveying sections (2a, 2b, 3a, 3b) which supply and convey further, one of the two drag plates (6a, 6b) of the circulating system is connected with a third drag plate (6c) via further conveyor belts (2c, 2d, 3c, 3d) which supply and convey further, the third drag plate (6c) for the transfer or receiving of the material to be conveyed being connected between the circulating system and a main section which is formed by a further conveyor belt (2e, 3e) which supplies and conveys further.

8. The device according to Claim 7,
characterised in that
the three drag plates (6a, 6b, 6c) are driven by means of a single drive (12).

## Revendications

1. Dispositif pour le transfert d'objets, en particulier des porte-pièces, avec au moins une voie de transport d'amenée sur au moins une voie de transport pour continuer l'amenée, comportant un plateau remorqué reliant les voies de transport et entraîné autour d'un axe de rotation, lequel plateau présente une surface de transport annulaire pour les objets, et un élément de détournement pour guider les objets du plateau remorqué sur la voie de transport continuant l'amenée, caractérisé en ce que le plateau remorqué (4) est constitué d'une roche dure naturelle ou d'une roche synthétique dure.

2. Dispositif selon la revendication 1,
caractérisé en ce que le plateau remorqué (4) est constitué de granite.

3. Dispositif selon une des revendications 1 ou 2,
caractérisé en ce que le plateau remorqué (6) est réalisé sous forme d'un disque cylindrique plat.

4. Dispositif selon une des revendications 1 à 3,
caractérisé en ce que le plateau remorqué (6) est monté sur des rouleaux de guidage et de support agencés de façon excentrique par rapport à l'axe de rotation.

5. Dispositif selon une des revendications 1 à 4,
caractérisé en ce que le plateau remorqué (6) peut être entraîné au moyen d'un entraînement à roue de friction.

6. Dispositif selon une des revendications 1 à 5,
caractérisé en ce que les voies de transport (2,3) sont constituées, à chaque fois, de deux éléments de transport (4) écartés l'un de l'autre et s'étendant parallèlement l'un à l'autre, qui sont réalisés sous forme de transporteurs à courroie ou à chaîne à rouleaux d'accumulation et portent les objets (1) sur leurs zones latérales et les guident par l'intermédiaire de rails de guidage(5).

7. Dispositif selon une des revendications 1 à 6,
caractérisé en ce qu'un système de circulation pour les objets est formé par deux plateaux remorqués (6a et 6b), qui sont reliés ensemble, à chaque fois, par des voies de transport d'amenée et continuant l'amenée (2a,2b,3a,3b), un des deux plateaux remorqués (6a,6b) du système de circulation étant relié, par l'intermédiaire d'autres voies de transport d'amenée et continuant l'amenée (2c,2d, 3c,3d), à un troisième plateau remorqué (6c), le troisième plateau remorqué (6c) étant relié pour le transfert ou la réception des objets entre le système de circulation et une étendue principale qui est formée par une autre voie de transport d'amenée et continuant l'amenée (2e,3e).

8. Dispositif selon la revendication 7,
caractérisé en ce que les trois plateaux remorqués (6a,6b,6c) sont entraînés par l'intermédiaire d'un entraînement unique (12).
